# FASCICULE DE BREVET EUROPEEN

(11) **EP 2 716 499 B1**
(45) Date de publication et mention de la délivrance du brevet: **27.04.2016**
(21) Numéro de dépôt: 12306218.4
(22) Date de dépôt: 05.10.2012
(51) Int. Cl.: E05D 7/12, B60R 5/04

(54) **Ensemble arrière de véhicule automobile et véhicule automobile associé**
Heckanordnung eines Kraftfahrzeugs und zugehöriges Kraftfahrzeug
Rear assembly of an automobile vehicle and associated automobile vehicle

(43) Date de publication de la demande: 09.04.2014
(73) Titulaire: Faurecia Innenraum Systeme GmbH, 76767 Hagenbach (DE)
(72) Inventeur: Rolain, David, 67489 ROPPENHEIM (FR)
(74) Mandataire: Blot, Philippe Robert Emile

(56) Documents cités:
- EP-A1- 0 332 059
- WO-A1-96/32301
- DE-A1-102009 058 570

## Description

La présente invention concerne un ensemble arrière de véhicule automobile, comportant:
- au moins une garniture latérale, destinée à délimiter latéralement un coffre du véhicule automobile ;
- une tablette de support d'objects;
- un mécanisme de guidage en rotation de la tablette de support d'objets autour d'un axe transversal, par rapport à la garniture latérale.

Un tel ensemble est par exemple décrit dans EP 0 332 059 qui montre le préambule de la revendication 1.

Un tel ensemble est destiné à recevoir une tablette articulée transversalement entre les flancs du véhicule automobile pour séparer le coffre en un compartiment inférieur, dans lequel des objets présents dans le coffre sont masqués par la tablette, et un compartiment supérieur dans lequel des objets peuvent être portés par la tablette.

Lors de l'ouverture du coffre, la tablette est inclinée par rapport à sa position de repos horizontale en appui sur les garnitures latérales, soit par une action manuelle de l'utilisateur, soit par des cordons reliant la tablette au hayon.

Pour monter une tablette de ce type dans les garnitures latérales du véhiculé, il est connu d'utiliser un mécanisme de guidage comprenant des axes transversaux rapportés de part et d'autre de la tablette autour de son axe de rotation. Les axes sont insérés dans des logements cylindriques complémentaires ménagés dans les garnitures latérales du véhicule. Une tablette adaptée pour un tel ensemble arrière est coûteuse à fabriquer.

Pour réduire le coût de la tablette, FR 2 850 917 propose une tablette dépourvue d'axes passant par son axe de rotation. Cette tablette comprend latéralement une première surface de butée coopérant avec une surface de butée complémentaire solidaire des supports, lors du pivotement de la tablette.

La tablette comprend en outre une surface de retenue coopérant, en fin de course de la tablette, avec une surface de retenue complémentaire. La tablette est insérée dans les garnitures latérales en l'inclinant par rapport à sa position horizontale.

Puis, lorsqu'une force de traction dirigée au moins partiellement vers l'avant du véhicule est exercée, la tablette pivote jusqu'à sa position inclinée de fin de course. Cette tablette est actionnée manuellement.

Une telle tablette donne donc satisfaction lorsque la force d'actionnement de la tablette est dirigée en permanence vers l'avant du véhicule automobile.

Toutefois, lorsque la tablette est opérée manuellement pour la faire passer de sa position horizontale à sa position inclinée de fin de course, il existe un risque élevé qu'elle sorte de la garniture, par exemple lorsque l'utilisateur tire la tablette vers l'arrière en la relevant.

Si l'utilisateur referme le hayon sans contrôler le bon positionnement de la tablette, celle-ci peut se briser.

De ce fait, les tablettes sans axe peuvent être perçues par l'utilisateur du véhicule comme fragiles, et de moindre qualité.

Un but de l'invention est donc d'obtenir un ensemble arrière qui permette de recevoir, de manière robuste et fiable, une tablette dé support d'objets, sans augmenter le coût ou la complexité de la tablette.

À cet effet, l'invention a pour objet un ensemble arrière d'après la revendication 1 du type précité, où le mecanisme de guidage comporte, pour chaque garniture latérale, un organe d'insertion d'au moins un bord de la tablette, l'organe d'insertion étant monté rotatif autour de l'axe transversal sur la garniture latérale.

L'ensemble selon l'invention peut comprendre l'une ou plusieurs des caractéristiques suivantes, prise(s) isolément ou suivant toute combinaison techniquement possible :
- l'organe d'insertion comporte un étrier délimitant un passage d'insertion de la tablette ;
- l'étrier délimite une surface supérieure et une surface inférieure définissant entre elles le passage d'insertion, la tablette étant propre à être enserrée entre la surface supérieure et la surface inférieure, l'étrier définissant avantageusement une surface avant de butée axiale de la tablette ;
- l'organe d'insertion fait saillie transversalement vers l'intérieur du coffre par rapport à la garniture latérale ;
- le mécanisme de guidage définit un orifice traversant de guidage ménagé à travers la garniture latérale, l'organe d'insertion comportant au moins une saillie de guidage engagée à travers l'orifice traversant ;
- la saillie de guidage s'étend le long de l'axe transversal ;
- la saillie de guidage est excentrée par rapport à l'axe transversal ;
- le mécanisme de guidage comporte un organe de retenue transversale de l'organe d'insertion sur la garniture latérale ;
- le mécanisme de guidage comporte un ensemble de limitation de la course en rotation de l'organe d'insertion autour de l'axe transversal ;
- l'organe d'insertion est monté rotatif autour de l'axe transversal entre une configuration de maintien de la tablette dans une position de repos, dans laquelle la tablette est maintenue sensiblement horizontalement, et une configuration de maintien de la tablette dans une position d'accès au coffre, dans laquelle la tablette est inclinée par rapport à l'horizontale, le mécanisme de guidage comportant avantageusement un organe de sollicitation élastique de l'organe d'insertion vers sa position de repos ;
- le mécanisme de guidage comporte un organe de contact avec l'organe d'insertion, monté fixe sur la garniture latérale, l'organe de contact présentant avantageusement un coefficient de frottement avec l'organe d'insertion inférieur à 0,05.
- au moins un bord de la tablette étant engagé de manière libérable dans chaque organe d'insertion ;
- il comporte deux garnitures latérales opposées, délimitant entre elles le coffre, le mécanisme de guidage comportant deux organes d'insertion d'au moins un bord de la tablette, chaque organe d'insertion étant monté rotatif autour de l'axe transversal sur une garniture latérale respective ;
- la tablette comporte un premier coin inséré dans un premier organe d'insertion et un deuxième coin inséré dans un deuxième organe d'insertion.
- l'ensemble de limitation de la course comporte un pion solidaire de l'un de l'organe d'insertion et de la garniture latérale, et une gorge solidaire de l'autre de l'organe d'insertion et de la garniture latérale, le pion étant reçu dans la gorge.

L'invention a également pour objet un véhicule automobile comportant un ensemble arrière tel que défini plus haut.

Le véhicule peut comprendre la caractéristique suivante :
- la garniture latérale délimite un coffre du véhicule automobile, l'organe d'insertion faisant saillie transversalement dans le coffre par rapport à la garniture latérale.

L'invention sera mieux comprise à la lecture de la description qui va suivre, donnée uniquement à titre d'exemple, et faite en se référant aux dessins annexés, sur lesquels :
- la figure 1 est une vue de dessus partielle d'un premier ensemble arrière selon l'invention ;
- la figure 2 est une vue schématique, prise en coupe partielle suivant le plan II, de l'ensemble arrière de la figure 1 ;
- la figure 3 est une vue schématique, prise en coupe partielle suivant le plan III, de l'ensemble arrière de la figure 1 ;
- la figure 4 est une vue analogue à la figure 3 d'un deuxième ensemble arrière selon l'invention ;
- la figure 5 est une vue analogue à la figure 2 du deuxième ensemble arrière selon l'invention ;
- la figure 6 est une vue analogue à la figure 3 d'un troisième ensemble arrière selon l'invention ;
- la figure 7 est une vue de côté d'un organe d'insertion du troisième ensemble arrière selon l'invention ; et
- la figure 8 est une vue de côté de la garniture latérale du troisième ensemble arrière selon l'invention.

Dans tout ce qui suit, les orientations adoptées sont les orientations habituelles d'un véhicule automobile. Ainsi, les termes "arrière", "avant", "supérieur", "inférieur", "extérieur", "intérieur", "longitudinal", "transversal", "gauche", "droite", s'entendent par rapport au sens normal de circulation du véhicule automobile et à la position d'un conducteur.

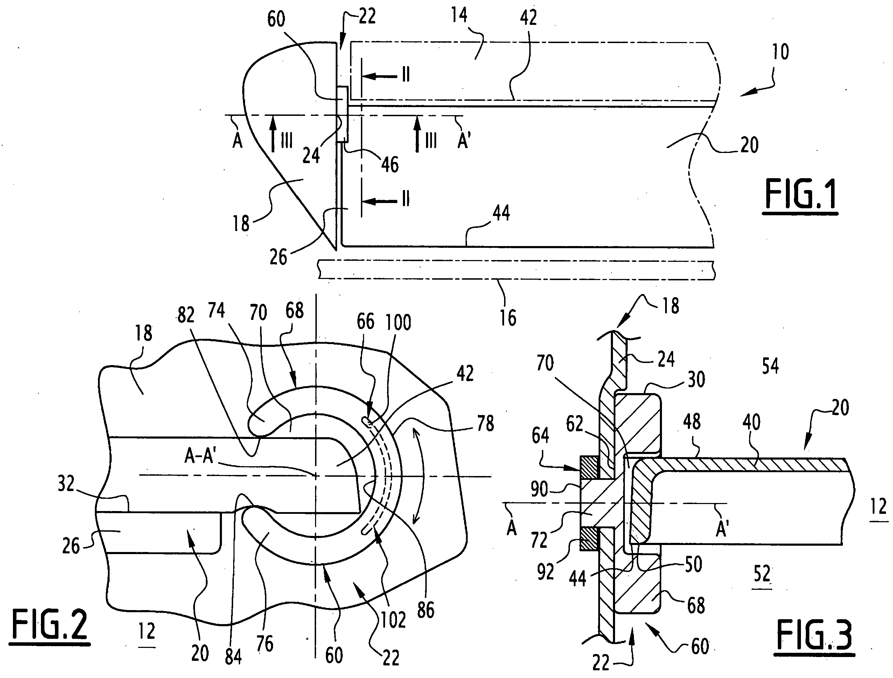

Un premier ensemble arrière 10 d'un véhicule automobile selon l'invention est illustré par les figures 1 à 3.

L'ensemble arrière 10 délimite un coffre 12 du véhicule automobile, visible sur les figures 2 et 3. Le coffre 12 est par exemple destiné à recevoir des objets, tels que des bagages ou des marchandises.

De manière connue, l'ensemble arrière 10 comporte un plancher (non représenté) délimitant le coffre 12 vers le bas, un siège 14, délimitant axialement le coffre 12 vers l'avant et un hayon 16 délimitant axialement le coffre 12 vers l'arrière.

Selon l'invention, l'ensemble arrière 10 comporte deux garnitures latérales opposées 18 (dont l'une est visible sur la figure 1), et une tablette 20 de support d'objets, montée rotative autour d'un axe transversal A-A' entre les garnitures latérales 18, depuis une position horizontale de repos, vers une position inclinée d'accès au coffre 12.

L'ensemble arrière 10 comporte de plus un mécanisme 22 de guidage du déplacement de la tablette 20 entre la position de repos et la position d'accès, recevant de manière libérable la tablette 20.

Chaque garniture latérale 18 est fixée sur un flanc respectif (non représenté) du véhicule automobile.

La garniture latérale 18 comporte une paroi sensiblement verticale 24 délimitant latéralement le coffre 12, et avantageusement, un appui de tablette 26, destiné au support de la tablette 20 dans sa position de repos.

Dans l'exemple illustré par la figure 3, la paroi verticale 24 présente un renfoncement 30 s'ouvrant dans le coffre 12, logeant le mécanisme de guidage 22.

L'appui de tablette 26 s'étend à l'arrière du mécanisme 22, sur une partie de la longueur de la tablette 20.

L'appui de tablette 26 délimite une surface supérieure 32 horizontale d'appui de la tablette, lorsqu'elle occupe sa position de repos.

La tablette 20 comprend un corps 40 de tablette s'étendant sensiblement dans un plan moyen. Le corps 40 présente un contour globalement rectangulaire, pris dans son plan moyen.

En référence à la figure 1, le corps 40 s'étend entre un bord avant 42 placé au voisinage des sièges arrière 14, et un bord arrière 44 destiné à être placé au voisinage du hayon 16 lorsque le hayon 16 obture le coffre 12.

Le corps 40 s'étend en outre transversalement sur toute la largeur du coffre 12 entre l'appui plan 26 de la garniture gauche 18 et l'appui plan de la garniture droite (non représentée).

La largeur de la tablette 20, prise entre le bord gauche 46 et le bord droit est supérieure à la distance séparant les appuis plans respectifs 36 en regard de chaque flanc 14.

Le corps 40 de la tablette 20 est avantageusement réalisé en matière thermoplastique, éventuellement renforcée par des fibres ou du métal. Le corps 40 peut être revêtu de textile tel que de la moquette, un non-tissé ou un tissu.

Il présente une surface supérieure 48, sur laquelle peuvent être disposés en appui des objets de masse supérieure à plusieurs dizaines de grammes sans déformation significative de la tablette.

Le corps 40 présente en outre une surface inférieure 50 destinée à s'appuyer sur les appuis plans 36 le long du bord gauche 46 et du bord droit.

Comme précisé plus haut, la tablette 20 est montée mobile en rotation par rapport aux garnitures 18, par l'intermédiaire du mécanisme de guidage 22, autour de l'axe transversal A-A', entre la position de repos sensiblement horizontale et la position inclinée d'accès au coffre 12.

La tablette 20 est en outre déplaçable entre une configuration engagée dans le mécanisme de guidage 22, et une configuration désengagée hors du mécanisme 22, dans laquelle la tablette 20 peut être extraite hors du coffre 12.

Dans la position horizontale, la tablette 20 est disposée en appui sur les appuis plans 36.

Elle s'étend sur toute la largeur du véhicule entre les garnitures 18. En référence à la figure 3, la tablette 20 délimite dans le coffre 12 un compartiment inférieur 52 de stockage d'objets masqué vers le haut par la tablette 20 et un compartiment supérieur 54 visible depuis l'extérieur du véhicule à travers une vitre du hayon 18.

Dans la position inclinée de fin de course, la tablette 20 a pivoté autour de l'axe transversal A-A' par déplacement de son bord arrière 44 vers le haut et vers l'avant. L'accès aux compartiments inférieur 52 est alors possible.

Selon l'invention, la tablette 20 est dépourvue de pivots passant par son axe de rotation A-A'. Plus généralement, aucun élément de la tablette 20 ne fait saillie latéralement à partir de son bord gauche 46 ou de son bord droit (non représenté) pour s'engager dans une garniture 18.

Selon l'invention, comme visible sur les figures 2 et 3, le mécanisme de guidage 22 comporte, pour chaque garniture 18, un organe rotatif 60 d'insertion d'au moins un bord 42, 46 de la tablette 20, monté sur la garniture 18 à travers un orifice de guidage 62 ménagé dans la garniture 18.

Le mécanisme de guidage 22 comporte, pour chaque organe d'insertion 60, un organe 64 de retenue transversale de l'organe d'insertion 60 sur la garniture 18, et avantageusement, un ensemble 66 de limitation de la course en rotation de l'organe d'insertion 60 (visible sur la figure 2).

Dans cet exemple, le mécanisme 22 comporte deux organes d'insertion 60 respectifs montés sur les garnitures opposées 18. Les deux organes d'insertion 60 sont disposés le long de l'axe transversal A-A', en regard l'un de l'autre.

Chaque organe d'insertion 60 fait saillie transversalement dans le coffre 12 à partir de la garniture 18 sur laquelle il est monté. Il est monté rotatif autour de l'axe transversal A-A' entre une configuration de maintien de la tablette 20 dans la position horizontale de repos et une configuration de maintien de la tablette 20 dans la position inclinée d'accès au coffre.

Chaque organe d'insertion 60 comporte un étrier 68 délimitant un passage 70 d'insertion d'un bord de la tablette 20, et une saillie 72 de guidage en rotation (visible sur la figure 3), insérée à travers l'orifice 62.

L'étrier 68 fait saillie dans le coffre 12. Dans cet exemple, il comprend une cloison supérieure 74 et une cloison inférieure 76 de blocage de la tablette 20. Il comprend avantageusement une cloison avant 78 raccordant la cloison supérieure 74 à la cloison inférieure 76.

Dans cet exemple, les cloisons 74, 76 sont incurvées, respectivement vers le haut et vers le bas. L'étrier 68 présente ainsi une section en forme de C ou de U, prise dans un plan axial vertical du véhicule.

Le passage 70 s'étend entre les cloisons 74 à 78. Il est délimité vers le haut par une surface supérieure 82 définie sous la cloison 74 et vers le bas par une surface inférieure 84 définie sur la cloison 76.

La distance verticale minimale séparant la surface supérieure 82 de la surface inférieure 84 est sensiblement égale à la hauteur de la tablette 20, prise entre la surface supérieure 48 et la surface inférieure 50 au niveau du bord 46 de la tablette 20 inséré dans le passage 70.

Ainsi, la tablette 20 est propre à être enserrée entre les surfaces 82, 84 dans la configuration engagée dans le mécanisme 22.

Le passage 70 est en outre délimité axialement vers l'avant par une surface avant 86 de blocage axial, définie sur la cloison avant 78. Il est obturé latéralement vers l'extérieur par une cloison latérale 85.

Le passage 70 débouche ainsi vers l'arrière entre les cloisons 74, 76. Il débouche latéralement vers l'intérieur du véhicule entre les cloisons 74, 76, à l'arrière de la cloison avant 78.

La saillie de guidage 72 fait saillie le long de l'axe transversal A-A' vers l'extérieur à partir de l'étrier 68. Elle est insérée dans l'orifice de guidage 62. Elle présente une section, prise dans un plan vertical axial du véhicule, sensiblement complémentaire à la section de l'orifice de guidage 62, prise dans le même plan.

Une partie libre 90 de la saillie de guidage 72 s'étend vers l'extérieur hors de l'orifice de guidage 62, à l'opposé de l'étrier 68 par rapport à la paroi 24.

L'orifice de guidage 62 est ménagé à travers la paroi 24 de la garniture 18. Dans cet exemple, il s'étend suivant l'axe A-A'. Il traverse la paroi 24.

L'orifice 62 présente une section minimale, prise dans un plan vertical axial du véhicule, inférieure à la section maximale de l'étrier 68, prise dans un plan vertical axial du véhicule.

L'organe de retenue 64 comprend par exemple un corps 92 fixé sur la partie libre 90 de la saillie de guidage 72, par exemple par encliquetage. Le corps 92 est avantageusement une bague ou un clip.

L'organe de retenue 64 bloque transversalement en position l'organe d'insertion 60, pour empêcher son déplacement hors de l'orifice 62 par translation transversale vers un axe central du véhicule.

En référence à la figure 2, l'ensemble de limitation 66 de la course de l'organe d'insertion 60 comporte dans cet exemple un pion 100, solidaire de l'organe de retenue 64 et une gorge 102 ménagée dans la garniture latérale 18.

La gorge 102 reçoit le pion 100. Elle présente ici une forme d'arc de cercle. Les extrémités de la gorge 102 forment des butées angulaires de limitation du déplacement en rotation de l'organe de retenue 64 autour de l'axe transversal A-A'.

Le fonctionnement du premier ensemble arrière 10 selon l'invention va maintenant être décrit.

Initialement, lors de son montage, la tablette 20 est insérée dans le passage d'insertion 70 de chaque organe d'insertion 64. A cet effet, le coin avant gauche de la tablette 20 est introduit dans le passage d'insertion 70 de l'organe d'insertion 60 monté sur la garniture gauche 18, et le coin avant droit de la tablette est introduit dans le passage d'insertion 70 de l'organe d'insertion 60 monté sur la garniture droite (non représentée).

Le bord gauche 46 et le bord droit (non représenté) de la tablette 20 sont ainsi enserrés entre les surfaces 82, 84 de chaque organe d'insertion 60, pour verrouiller de manière libérable la tablette 20 sur chaque organe d'insertion 60.

De manière classique, la tablette 20 est alors avantageusement raccordée au hayon 16 par l'intermédiaire au moins un lien flexible.

Lorsque le hayon 16 obture le coffre 12 vers l'arrière, la tablette 20 occupe sa position horizontale de repos. Les bords latéraux de la tablette 20 sont alors posés sur chaque appui de tablette 26. La tablette 20 obture alors le compartiment inférieur 52 et masque son contenu.

Lorsque le hayon 16 est ouvert, la tablette 20 est apte à pivoter autour de l'axe transversal A-A' jusqu'à une position inclinée d'accès au coffre 12. Son bord arrière 44 se soulève et se déplace vers l'avant.

La tablette 20 entraîne en rotation conjointe chaque organe d'insertion 60 autour de l'axe A-A'. Le déplacement en rotation de la tablette 20 est limité par l'ensemble de limitation 66 de la course en rotation, lorsqu'il est présent.

Par ailleurs, chaque organe d'insertion 60 maintient l'axe transversal de rotation A-A' de la tablette 20 à une position axiale constante dans le véhicule.

Le guidage de la rotation de la tablette 20 par le mécanisme de guidage 22 est donc robuste et fiable, ce qui confère à l'ensemble arrière 10 une solidité structurelle.

Cet effet est obtenu à moindre coût, puisque la tablette 20 conserve une structure très simple, sans qu'il soit nécessaire de monter des axes ou des pivots sur la tablette 20.

Lorsque l'utilisateur souhaite disposer d'un espace continu sur toute la hauteur du coffre 12, il extrait chaque coin de la tablette 20 hors du passage d'insertion 70 de l'organe d'insertion 60 dans lequel il est retenu. La tablette 20 occupe alors une configuration désengagée du mécanisme 22 et peut être extraite hors du véhicule.

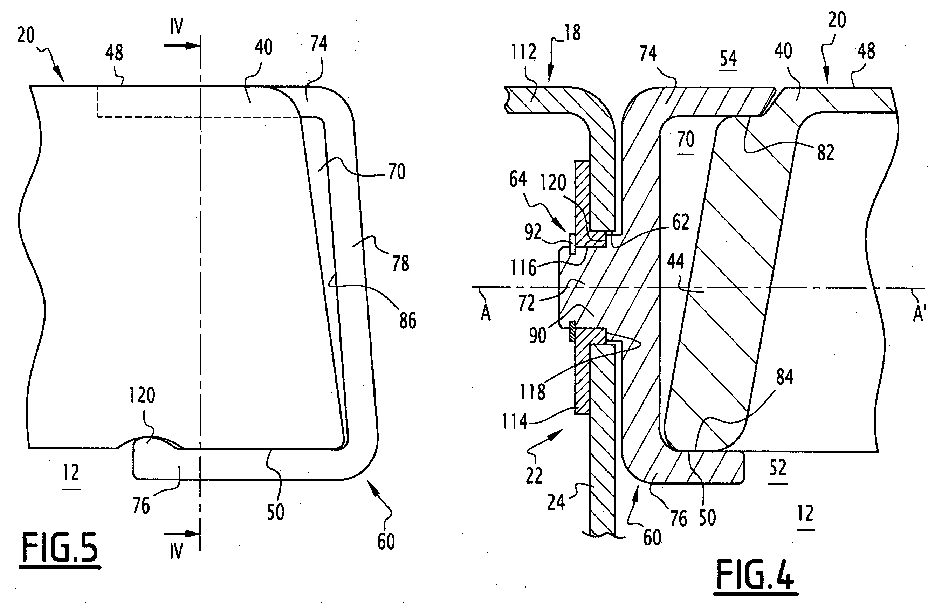

Un deuxième ensemble arrière 110 selon l'invention est illustré par les figures 4 et 5.

À la différence du premier ensemble 10 selon l'invention, la garniture 18 comprend une paroi supérieure 112 sensiblement à la même hauteur que la surface supérieure 48 de la tablette 12, lorsque la tablette 12 occupe sa position de repos.

Par ailleurs, le mécanisme de guidage 22 comporte, pour chaque organe d'insertion 60, un organe 114 de contact avec l'organe d'insertion 60, assurant un contact de faible frottement avec l'organe d'insertion 60.

L'organe de contact 114 est avantageusement rapporté sur la garniture 18 notamment sur une surface extérieure de la garniture 18. Il est par exemple introduit en partie dans l'orifice de guidage 62.

L'organe de contact 114 est monté fixe en rotation autour de l'axe A-A' sur la garniture 18.

L'organe d'insertion 60 est placé au contact de l'organe de contact 114, avantageusement sans entrer en contact avec la paroi verticale 24 de la garniture 18.

L'organe de contact 114 présente avantageusement un coefficient de frottement avec l'organe d'insertion 60 inférieur à 0,05.

Ainsi, l'organe de contact 114 définit un passage central 116 recevant la saillie de guidage 72 et une surface de butée 118, coopérant avec un épaulement 120 présent sur l'organe d'insertion 60. L'épaulement 120 glisse sur la surface de la butée 118 lors de la rotation de l'organe d'insertion 60 autour de son axe.

Par ailleurs, dans cet exemple, la cloison inférieure 76 est sensiblement plane et délimite un bourrelet 120 de serrage de la surface inférieure 50 de la tablette 20.

Le fonctionnement du deuxième ensemble arrière 110 selon l'invention est par ailleurs analogue à celui du premier ensemble arrière 10.

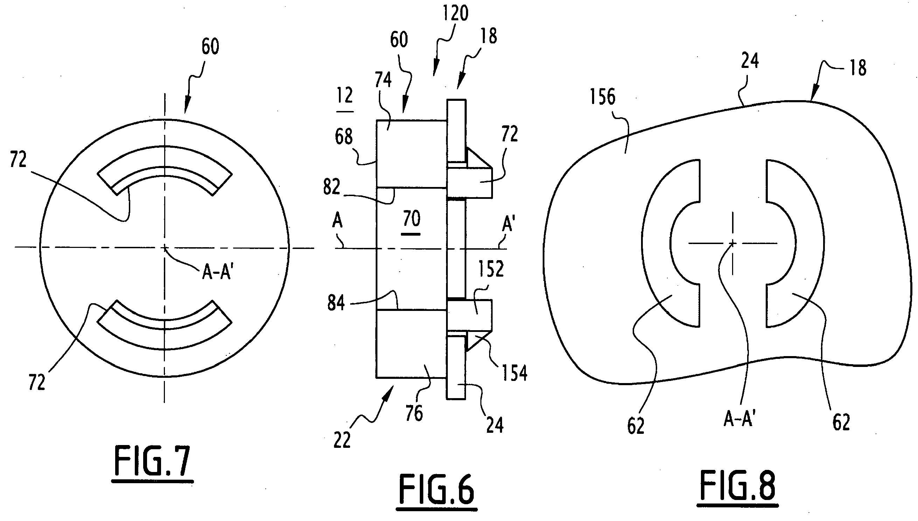

Un troisième ensemble arrière 150 selon l'invention est illustré par les figures 6 à 8.

À la différence du premier ensemble arrière 10, chaque organe d'insertion 60 comporte au moins une saillie de guidage 72 excentrée par rapport à l'axe transversal A-A'.

De manière correspondante, comme illustré par la figure 8, chaque garniture 18 définit, pour chaque saillie de guidage 72, un orifice de guidage 62 excentré par rapport à l'axe transversal A-A'.

Dans l'exemple représenté sur les figures 6 à 8, chaque organe d'insertion 60 comporte deux saillies de guidage 72 excentrées, disposés diamétralement opposés l'une par rapport à l'autre.

Dans cet exemple, chaque saillie de guidage 72 présente une forme incurvée. Elle comporte une patte 152 insérée dans un orifice 62 et une tête de retenue 154 faisant saillie transversalement par rapport à la patte 152 hors de l'orifice 62, à l'opposé de l'étrier 68 par rapport à la paroi 24.

La tête 154 forme ainsi un organe de retenue 64 de l'organe d'insertion 60 dans la garniture 18.

Chaque orifice 62 présente une forme de fente 156 incurvée. Les extrémités de la fente 156 forment des butées de limitation de la course angulaire de l'organe d'insertion 60 autour de l'axe transversal A-A'.

Dans cet exemple, chaque saillie 72 constitue ainsi un pion d'un ensemble de limitation 66 de la course angulaire de l'organe d'insertion 60 et l'orifice 62 constitue une gorge correspondante de l'ensemble de limitation 66.

Le fonctionnement du troisième ensemble arrière 120 selon l'invention est par ailleurs analogue à celui du premier ensemble 10.

Dans une variante (non représentée), le mécanisme de guidage 22 comporte un organe de sollicitation élastique, interposé entre au moins un organe d'insertion 60 et la garniture latérale 18 portant cet organe 60. L'organe de sollicitation élastique est propre à rappeler l'organe d'insertion 60 dans la configuration de maintien de la tablette 20 dans sa position de repos.

Ainsi, lorsque la tablette 20 occupe une position inclinée, l'organe de sollicitation élastique sollicite l'organe d'insertion 60 et la tablette 20 montée sur cet organe 60, afin d'entraîner en rotation l'organe d'insertion 60 vers la configuration de maintien de la tablette 20 dans la position de repos.

## Revendications

1. Ensemble arrière (10 ; 110 ; 150) de véhicule automobile, comportant :
- au moins une garniture latérale (18), destinée à délimiter latéralement un coffre (12) du véhicule automobile ;
- une tablette (20) de support d'objets, présentant un bord avant (42), un bord arrière (44), un bord gauche (46) et un bord droit,
- un mécanisme (22) de guidage en rotation de la tablette (20) de support d'objets autour d'un axe transversal (A-A'), par rapport à la garniture latérale (18),
**caractérisé en ce que** :
- la tablette (20) est dépourvue d'élément faisant saillie latéralement à partir de son bord gauche (46) ou de son bord droit pour s'engager dans la garniture latérale (18), et
- le mécanisme de guidage (22) comporte, pour chaque garniture latérale (18), un organe (60) d'insertion d'au moins l'un des bords (42, 46) de la tablette, l'organe d'insertion (60) étant monté rotatif autour dé l'axe transversal (A-A') sur la garniture latérale (18) et verrouillant de manière libérable la tablette.

2. Ensemble (10 ; 110 ; 150) selon la revendication 1, **caractérisé en ce que** l'organe d'insertion (60) comporte un étrier (68) délimitant un passage (70) d'insertion de la tablette (20).

3. Ensemble (10 ; 110 ; 150) selon la revendication 2, **caractérisé en ce que** l'étrier (68) délimite une surface supérieure (82) et une surface inférieure (84) définissant entre elles le passage d'insertion (70), la tablette (20) étant propre à être enserrée entre la surface supérieure (82) et la surface inférieure (84), l'étrier (68) définissant avantageusement une surface avant (86) de butée axiale de la tablette (20).

4. Ensemble (10 ; 110 ; 150) selon l'une quelconque des revendications précédentes, **caractérisé en ce que** l'organe d'insertion (60) fait saillie transversalement vers l'intérieur du coffre (12) par rapport à la garniture latérale (18).

5. Ensemble (10 ; 110 ; 150) selon l'une quelconque des revendications précédentes, **caractérisé en ce que** le mécanisme de guidage (22) définit un orifice traversant (62) de guidage ménagé à travers la garniture latérale (18), l'organe d'insertion (60) comportant au moins une saillie (72) de guidage engagée à travers l'orifice traversant (62).

6. Ensemble (10 ; 110) selon la revendication 5, **caractérisé en ce que** la saillie de guidage (72) s'étend le long de l'axe transversal (A-A').

7. Ensemble (150) selon la revendication 5, **caractérisé en ce que** la saillie de guidage (72) est excentrée par rapport à l'axe transversal (A-A').

8. Ensemble (10 ; 110 ; 150) selon l'une quelconque des revendications précédentes, **caractérisé en ce que** le mécanisme de guidage (22) comporte un organe (64) de retenue transversale de l'organe d'insertion (60) sur la garniture latérale (18).

9. Ensemble (10 ; 110 ; 150) selon l'une quelconque des revendications précédentes, **caractérisé en ce que** le mécanisme de guidage (22) comporte un ensemble (66) de limitation de la course en rotation de l'organe d'insertion (60) autour de l'axe transversal (A-A').

10. Ensemble (10 ; 110 ; 150) selon l'une quelconque des revendications précédentes, **caractérisé en ce que** l'organe d'insertion (60) est monté rotatif autour de l'axe transversal (A-A') entre une configuration de maintien de la tablette (20) dans une position de repos, dans laquelle la tablette (20) est maintenue sensiblement horizontalement, et une configuration de maintien de la tablette (20) dans une position d'accès au coffre (12), dans laquelle la tablette (20) est inclinée par rapport à l'horizontale, le mécanisme de guidage (22) comportant avantageusement un organe de sollicitation élastique de l'organe d'insertion vers sa position de repos.

11. Ensemble (10 ; 110 ; 150) selon l'une quelconque des revendications précédentes, **caractérisé en ce que** le mécanisme de guidage (22) comporte un organe (114) de contact avec l'organe d'insertion (60), monté fixe sur la garniture latérale (18), l'organe de contact (114) présentant avantageusement un coefficient de frottement avec l'organe d'insertion (60) inférieur à 0,05.

12. Ensemble (10 ; 110 ; 150) selon l'une quelconque des revendications précédentes, **caractérisé en ce qu'**au moins l'un des bords (42, 46) de la tablette (20) est engagé de manière libérable dans chaque organe d'insertion (60).

13. Ensemble (10 ; 110 ; 150) selon l'une quelconque des revendications précédentes, **caractérisé en ce qu'**il comporte deux garnitures latérales (18) opposées, délimitant entre elles le coffre (12), le mécanisme de guidage (22) comportant deux organes d'insertion (60) d'au moins l'un des bords (42, 46) de la tablette (20), chaque organe d'insertion (20) étant monté rotatif autour de l'axe transversal (A-A') sur une garniture latérale (18) respective.

14. Ensemble (10 ; 110 ; 150) selon la revendication 13, **caractérisé en ce que** la tablette (20) comporte un premier coin inséré dans un premier organe d'insertion (60) et un deuxième coin inséré dans un deuxième organe d'insertion (60).

15. Véhicule automobile, **caractérisé en ce qu'**il comporte un ensemble (10 ; 110 ; 150) selon l'une quelconque des revendications précédentes.

## Patentansprüche

1. Heckanordnung (10; 110; 150) eines Kraftfahrzeugs, umfassend:
- mindestens eine seitliche Verkleidung (18), die ausgelegt ist, um einen Behälter (12) des Kraftfahrzeugs seitlich zu begrenzen;
- eine Ablage (20) zum Tragen von Gegenständen, umfassend einen vorderen Rand (42), einen hinteren Rand (44), einen linken Rand (46) und einen rechten Rand,
- einen Mechanismus (22) zur drehenden Führung der Ablage (20) zum Tragen von Gegenständen um eine Querachse (A-A') mit Bezug auf die seitliche Verkleidung (18),
**dadurch gekennzeichnet, dass**:
- die Ablage (20) kein Element aufweist, das seitlich von ihrem linken Rand (46) oder von ihrem rechten Rand vorspringt, um in die seitliche Verkleidung (18) einzugreifen, und
- der Führungsmechanismus (22) für jede seitliche Verkleidung (18) ein zur Organ (60) zur Einführung von mindestens einem der Ränder (42, 46) der Ablage umfasst, wobei das Einführungsorgan (60) drehend um die Querachse (A-A') auf der seitlichen Verkleidung (18) montiert ist und die Ablage auf freisetzbare Weise verriegelt.

2. Anordnung (10; 110; 150) nach Anspruch 1, **dadurch gekennzeichnet, dass** das Einführungsorgan (60) einen Bügel (68) umfasst, der den Durchgang (70) zur Einführung der Ablage (20) begrenzt.

3. Anordnung (10; 110; 150) nach Anspruch 2, **dadurch gekennzeichnet, dass** der Bügel (68) eine obere Fläche (82) und eine untere Fläche (84) begrenzt, die untereinander einen Einführungsdurchgang (70) definieren, wobei die Ablage (20) geeignet ist, um zwischen der oberen Fläche (82) und der unteren Fläche (84) umschlossen zu sein, wobei der Bügel (68) vorteilhafterweise eine vordere Fläche (86) zum axialen Anstoß der Ablage (20) definiert.

4. Anordnung (10; 110; 150) nach einem der vorhergehenden Ansprüche, **dadurch gekennzeichnet, dass** das Einführungsorgan (60) quer zur Innenseite des Behälters (12) mit Bezug auf die seitliche Verkleidung (18) vorspringt.

5. Anordnung (10; 110; 150) nach einem der vorhergehenden Ansprüche, **dadurch gekennzeichnet, dass** der Führungsmechanismus (22) eine Durchgangsöffnung (62) zur Führung definiert, die durch die seitliche Verkleidung (18) angebracht ist, wobei das Einführungsorgan (60) mindestens einen Führungsvorsprung (72) umfasst, der durch die Durchgangsöffnung (62) eingreift.

6. Anordnung (10; 110; 150) nach Anspruch 5, **dadurch gekennzeichnet, dass** sich der Führungsvorsprung (72) entlang der Querachse (A-A') erstreckt.

7. Anordnung (150) nach Anspruch 5, **dadurch gekennzeichnet, dass** der Führungsvorsprung (72) mit Bezug auf die Querachse (A-A') exzentrisch ist.

8. Anordnung (10; 110; 150) nach einem der vorhergehenden Ansprüche, **dadurch gekennzeichnet, dass** der Führungsmechanismus (22) ein quer gerichtetes Rückhalteorgan des Einführungsorgans (60) auf der seitlichen Verkleidung (18) umfasst.

9. Anordnung (10; 110; 150) nach einem der vorhergehenden Ansprüche, **dadurch gekennzeichnet, dass** der Führungsmechanismus (22) eine Anordnung (66) zur drehenden Begrenzung des Wegs des Einführungsorgans (60) um die Querachse (A-A') umfasst.

10. Anordnung (10; 110; 150) nach einem der vorhergehenden Ansprüche, **dadurch gekennzeichnet, dass** das Einführungsorgan (60) drehend um die Querachse (A-A') zwischen einer Konfiguration zur Beibehaltung der Ablage (20) in einer Ruheposition, in der die Ablage (20) im Wesentlichen horizontal gehalten wird, und einer Konfiguration zur Beibehaltung der Ablage (20) in einer Position des Zugangs zum Behälter (12) montiert ist, in der die Ablage (20) mit Bezug auf die Horizontale geneigt ist, wobei der Führungsmechanismus (22) vorteilhafterweise ein Organ zur elastischen Beanspruchung des Einführungsorgans hin zu seiner Ruheposition umfasst.

11. Anordnung (10; 110; 150) nach einem der vorhergehenden Ansprüche, **dadurch gekennzeichnet, dass** der Führungsmechanismus (22) ein Organ (114) zum Kontakt mit dem Einführungsorgan (60) umfasst, das fest auf die seitliche Verkleidung (18) montiert ist, wobei das Kontaktorgan (114) vorteilhafterweise einen Reibungskoeffizienten mit dem Einführungsorgan (60) von weniger als 0,05 umfasst.

12. Anordnung (10; 110; 150) nach einem der vorhergehenden Ansprüche, **dadurch gekennzeichnet, dass** mindestens einer der Ränder (42, 46) der Ablage (20) auf freisetzbare Weise in jedem Einführungsorgan (60) eingegriffen ist.

13. Anordnung (10; 110; 150) nach einem der vorhergehenden Ansprüche, **dadurch gekennzeichnet, dass** sie zwei gegenüber liegende seitliche Verkleidungen (18) umfasst, die untereinander den Behälter (12) begrenzen, wobei der Führungsmechanismus (22) zwei Einführungsorgane (60) von mindestens einem der Ränder (42, 46) der Ablage (20) umfasst, wobei jedes Einführungsorgan (20) drehend um die Querachse (A-A') auf einer entsprechenden seitlichen Verkleidung (18) montiert ist.

14. Anordnung (10; 110; 150) nach Anspruch 13, **dadurch gekennzeichnet, dass** die Ablage (20) einen ersten Keil umfasst, der in ein erstes Einführungsorgan (60) und ein zweites Einführungsorgan (60) eingeführt ist.

15. Kraftfahrzeug, **dadurch gekennzeichnet, dass** es eine Anordnung (10; 110; 150) nach einem der vorhergehenden Ansprüche umfasst.

## Claims

1. A rear assembly (10; 110; 150) for a motor vehicle, comprising:
- at least one lateral lining (18), intended to laterally delimit a motor vehicle trunk (12);
- a tray (20) for supporting objects, having a front edge (42), a rear edge (44), a left edge (46) and a right edge,
- a mechanism (22) for guiding the rotation of the tray (20) for supporting objects around a transverse axis (A-A'), relative to the lateral lining (18).
**characterized in that**:
- the tray (20) is devoid of element protruding laterally from its left edge (46) or its right edge to be engaged in the lateral lining (18), and
- the guide mechanism (22) comprises, for each lateral lining (18), an insertion member (60) for at least one edge (42, 46) of the tray, the insertion member (60) being rotatably mounted around the transverse axis (A-A') on the lateral lining (18), and locking the tray (20) in a releasable manner.

2. The assembly (10; 110; 150) according to claim 1, **characterized in that** the insertion member (60) comprises a stirrup (68) delimiting a passage (70) for inserting one end of the tray (20).

3. The assembly (10; 110; 150) according to claim 2, **characterized in that** the stirrup (68) delimits an upper surface (82) and a lower surface (84) defining the insertion passage (70) between them, the tray (20) being able to be gripped between the upper surface (82) and the lower surface (84), the stirrup (68) advantageously defining a front axial stop surface (86) of the tray (20).

4. The assembly (10; 110; 150) according to any one of the preceding claims, **characterized in that** the insertion member (60) protrudes transversely toward the inside of the trunk (12) relative to the lateral lining (18).

5. The assembly (10; 110; 150) according to any one of the preceding claims, **characterized in that** the guide mechanism (22) defines a transverse guide orifice (62) arranged through the lateral lining (18), the insertion member (60) comprising at least one guide protrusion (72) engaged through the through orifice (62).

6. The assembly (10; 110) according to claim 5, **characterized in that** the guide protrusion (72) extends along the transverse axis (A-A').

7. The assembly (150) according to claim 5, **characterized in that** the guide protrusion (72) is off-centered relative to the transverse axis (A-A').

8. The assembly (10; 110; 150) according to any one of the preceding claims, **characterized in that** the guide mechanism (22) comprises a transverse retaining member (64) for retaining the insertion member (60) on the lateral lining (18).

9. The assembly (10; 110; 150) according to any one of the preceding claims, **characterized in that** the guide mechanism (22) comprises an assembly (66) for limiting the rotational travel of the insertion member (60) around the transverse axis (A-A').

10. The assembly (10; 110; 150) according to any one of the preceding claims, **characterized in that** the insertion member (60) is rotatably mounted around the transverse axis (A-A') between a configuration keeping the tray (20) in an idle position, in which the tray (20) is substantially horizontally maintained, and a configuration for keeping the tray (20) in a position for accessing the trunk (12), in which the tray (20) is inclined relative to the horizontal, the guide mechanism (22) advantageously comprising an elastic biasing member for biasing the insertion member toward its idle position.

11. The assembly (10; 110; 150) according to any one of the preceding claims, **characterized in that** the guide mechanism (22) comprises a contact member (114) for contact with the insertion member (60), mounted stationary on the lateral lining (18), the contact member (114) advantageously having a friction coefficient with the insertion member (60) of less than 0.05.

12. The assembly (10; 110; 150) according to any one of the preceding claims, **characterized in that** it comprises a tray (20) for supporting objects, at least one edge (42, 46) of the tray (20) being engaged in each insertion opening (60) such that it can be released.

13. The assembly (10; 110; 150) according to any one of the preceding claims, **characterized in that** it comprises two opposite lateral linings (18), delimiting the trunk (12) between them, the guide mechanism (22) comprising two members (60) for inserting at least one edge (42, 46) of the tray (20), each insertion member (20) being rotatably mounted around the transverse axis (A-A') on a respective lateral lining (18).

14. The assembly (10; 110; 150) according to claim 13, combined with claim 12, **characterized in that** the tray (20) comprises a first corner inserted into a first insertion member (60) and a second corner inserted into a second insertion member (60).

15. A motor vehicle, **characterized in that** it comprises an assembly (10; 110; 150) according to any one of the preceding claims.
